# EUROPÄISCHE PATENTANMELDUNG

(11) **EP 0 536 517 A2**
(43) Veröffentlichungstag der Anmeldung: **14.04.1993**
(21) Anmeldenummer: 92114293.1
(22) Anmeldetag: 21.08.1992
(51) Int. Cl.: B29C 51/00

(54) **Durch Tiefziehen hergestellter Kunststoffbehälter**

(30) Priorität: 07.10.1991 CH 2949/91
(71) Anmelder: STÄGER & CO. AG, CH-5612 Villmergen (CH)
(72) Erfinder: Wehrli, Zeno, CH-5607 Hägglingen (CH)
(74) Vertreter: Blum, Rudolf Emil Ernst

(57) **Zusammenfassung**

Ein Kunststoff-Behälter, der durch Tiefziehen geformt ist, besteht aus Polyaethylenterephtalat, das mit geschlossenen Poren versehen ist und im wesentlichen keinen kristallinen Anteil besitzt. Damit gelingt es überraschend, Kunststoff-Behälter zu schaffen, die bei wesentlicher Materialersparnis von bis zu 40 % eigenstabil sind und ohne Rückstellung flach gedrückt werden können.

## Beschreibung

Die Erfindung betrifft einen durch Tiefziehen hergestellten Kunststoffbehälter sowie ein Verfahren zu dessen Herstellung.

Kunststoffbehälter sind heute in vielfacher Form und Anwendung in Gebrauch. Insbesondere dienen sie als Einwegverpackungen für Lebensmittel. Neben den unbestrittenen Vorteilen, wie geringe Herstellungskosten, kleines Eigengewicht etc., tritt heute zunehmend die Problematik der Umweltbelastung bei der Beseitigung solcher Verpackungen ins Blickfeld.

Bis jetzt werden solche Behälter z.B. aus Polystyrol- oder Polypropylen-Folien tiefgezogen. Die verlangte Stabilität und Dichtheit der Behälter bestimmt die Wandstärke und damit die nötige Menge an Kunststoff, die für jeden Behälter nötig ist. Dabei tritt der zusätzliche Nachteil auf, dass die geleerten Behälter zur Reduktion des Abfallvolumens nur schwer zusammen gedrückt werden können. Dies deshalb, weil die heute dafür eingesetzten Kunststoffe ein ausgesprochen hohes Rückstellvermögen haben oder zum Splittern neigen. Im ersten Fall tendiert der Behälter nach dem Zusammendrücken dazu, sein ursprüngliches Volumen wieder anzunehmen, während im zweiten Fall beim Zusammendrücken eine erhebliche Verletzungsgefahr besteht. Es sind deshalb Joghurt-Becher entwickelt worden, deren Wände weit dünner sind, als bei herkömmlichen Masse-Kunststoffbechern, wodurch einerseits Material gespart wird, und sich der Becher anderseits leicht flach drücken lässt. Dieser Becher muss allerdings mit einer stabilisierenden Kartonhülle umgeben sein, welche auch als Lichtschutz dient und den Seitenwänden ausreichende Festigkeit verleiht. Vor dem Zusammendrücken des Bechers muss diese Kartonhülle entfernt und separat beseitigt werden. Diese Lösung ist aufwendig und verlangt vom Konsumenten besondere Aufmerksamkeit, die in der Regel nicht vorausgesetzt werden kann.

Es stellt sich damit die Aufgabe, einen eigenstabilen Kunststoffbehälter der eingangs genannten Art zu schaffen, der bei wesentlicher Materialersparnis keinen zusätzlichen Stützmantel oder dergleichen benötigt und ohne Rückstellung oder Verletzungsgefahr flach gedrückt werden kann.

Diese Aufgabe wird durch die in den Patentansprüchen genannten Merkmale gelöst. Damit gelingt es überraschend, eine Materialersparnis von bis zu 40 % gegenüber Behältern vergleichbaren Volumens zu erzielen, wobei die Behälterwandung bei gleicher Dicke reissfest und bruchsicher ist und praktisch kein Rückstellvermögen zeigt. Der leere Behälter kann flach zusammengedrückt werden und verbleibt von selbst in diesem Zustand. Diese Eigenschaft wird beim beanspruchten Folien-Material überraschenderweise durch weitere thermische Belastung und Verformung, wie sie beim Tiefziehen auftritt, noch verstärkt. Trotz dem Porengehalt besitzt dieses Material ein optimales, symmetrisches Tiefziehverhalten und die erforderliche Undurchlässigkeit gegen Sauerstoff und Wasserdampf. Insbesondere weist es eine geschlossene Oberfläche auf. Das Behältermaterial selbst ist physiologisch unbedenklich. Somit lassen sich die Behälter als Lebensmittelverpackungen, wie z.B. Joghurt-Becher, Trinkbecher und dergleichen einsetzen.

Nachfolgend wird anhand der Figuren ein Ausführungsbeispiel der Erfindung näher beschrieben.

Es zeigen dabei:
Fig. 1 ein Stück einer extrudierten Folie als Ausgangsmaterial,
Fig. 2 das Folienstück nach dem Tiefziehvorgang,
Fig. 3 das Folienstück mit dem daraus ausgestanzten Becher,
Fig. 4 der fertige, tiefgezogene Becher, und
Fig. 5 der flachgedrückte, in dieser Form verbleibende Becher.

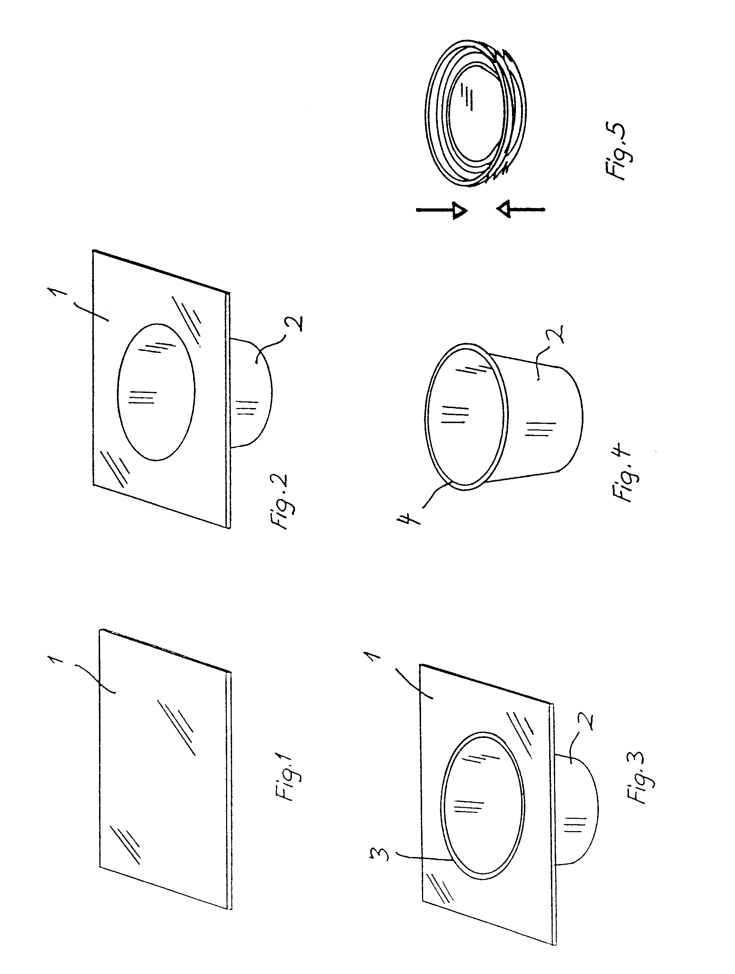

Aus Ausgangsmaterial für die Herstellung des erfindungsgemässen Behälters dient eine extrudierte Folie 1 aus Polyaetylenterephtalat (PET). Die Extrusion mit einem Triebmittel wird so gesteuert, dass sich ein Porenanteil von vorzugsweise 40 % bildet, wobei die geschlossenen Poren etwa eine Grösse zwischen 20 und 80 u besitzen, 100 u jedenfalls nicht wesentlich übersteigen. Ferner wird das PET-Material so gewählt, dass das Folienmaterial einen minimalen kristallinen Anteil aufweist. Die extrudierte Folie 1 dient als Ausgangsmaterial für einen thermoplastischen Formgebungsvorgang wie insbesondere Tiefziehen. Durch die thermische Belastung und Verformung der Folie beim Tiefziehen, wodurch sich die Foliendicke auf die Wandstärke des Behälters 2 von z.B. 1 mm reduziert, wird die erwünschte Eigenschaft der geringen Rückstellkraft des Materials verstärkt. Im Endzustand (Fig. 4) lässt sich deshalb der eigenstabile Behälter 2 von Hand flach drücken, ohne sich durch die Rückstellkraft des Materials wieder zu entfalten (vergl. Fig. 5). Nach dem Tiefziehen wird der Behälter 2 längs einer Stanzlinie 3 aus der Folie 1 ausgestanzt.

In an sich bekannter Weise kann ein Ringflansch 4 stehen gelassen werden, der zur Stabilisierung der Form bzw. zur Befestigung eines Verschlussdeckels dienen kann. Dabei sind die guten Schweisseigenschaften des Materials nutzbar.

Der so hergestellte Behälter 2 besitzt eine Wandstärke im üblichen Bereich (ca. 1 mm), weist jedoch ein um bis zu 40 % tieferes Gewicht auf, da die spezifische Dicke des Materials wegen des Porenanteiles mit 0.88 um 40 % reduziert ist. Das porenhaltige PET-Material ist dabei äusserst reissfest und bruchsicher und besitzt eine geschlossene, harte und bedruckbare Oberfläche. Das Material ist wegen des Gehalts an mikroskopischen Poren opak, d.h. undurchsichtig, ohne dass die Poren visuell wahrnehmbar sind.

Der erfindungsgemässe Behälter kann als Einweg-Trinkbecher oder Lebensmittelverpackung eingesetzt werden. Er hat den Vorteil, dass die als Abfall anfallende Materialmenge ebenso wie das Materialvolumen merklich herabgesetzt werden kann, ohne dass im Gebrauch Nachteile in Kauf genommen werden müssen.

## Patentansprüche

1. Durch Tiefziehen geformter Kunststoff-Behälter, dadurch gekennzeichnet, dass als Behältermaterial Polyaethylenterephtalat mit geschlossenen Poren vorgesehen ist, das im wesentlichen keinen kristallinen Anteil aufweist.

2. Kunststoffbehälter nach Anspruch 1, dadurch gekennzeichnet, dass die Porengrösse in einem Bereich von 20 - 100 um, vorzugsweise 20 - 80 um, liegt.

3. Kunststoffbehälter nach einem der vorangehenden Ansprüche, dadurch gekennzeichnet, dass der Porenanteil am Materialvolumen zwischen 10 und 50 % beträgt.

4. Kunststoffbehälter nach Anspruch 3, dadurch gekennzeichnet, dass der Porenanteil am Materialvolumen etwa 40 % beträgt.

5. Kunststoffbehälter nach einem der vorangehenden Ansprüche dadurch gekennzeichnet, dass das Behältermaterial ein spezifisches Gewicht von etwa 0.9 hat.

6. Kunststoffbehälter nach einem der vorangehenden Ansprüche, dadurch gekennzeichnet, dass die Wandstärke des Behälters zwischen 0.5 und 1 mm liegt.

7. Kunststoffbehälter nach einem der vorangehenden Ansprüche, dadurch gekennzeichnet, dass das Behältermaterial im wesentlichen kein Rückstellvermögen aufweist.

8. Kunststoffbehälter nach einem der vorangehenden Ansprüche, dadurch gekennzeichnet, dass das Behältermaterial opak ist und eine geschlossene Oberfläche besitzt.

9. Kunststoffbehälter nach einem der vorangehenden Ansprüche, dadurch gekennzeichnet, dass als Behältermaterial ein PET vorgesehen ist.

10. Kunststoff-Folie zum Tiefziehen eines Kunststoffbehälters nach einem der Ansprüche 1 bis 9, dadurch gekennzeichnet, dass die Folie ein Extrudat aus Polyaethylenterephtalat mit geschlossenen Poren und mit einer die Behälterwandstärke übersteigenden Dicke ist.

11. Verfahren zur Herstellung des Behälters nach einem der vorangehenden Ansprüche 1 bis 9, dadurch gekennzeichnet, dass durch Extrusion von Polyaethylenterephtalat mit einem Triebmittel eine Folie erzeugt wird, die im wesentlichen keinen kristallinen Anteil besitzt und geschlossene Poren hat, und dass aus dieser Folie durch Tiefziehen ein Behälter geformt wird.
